# DEMANDE DE BREVET EUROPEEN

(11) **EP 0 858 925 A1**
(43) Date de publication de la demande: **19.08.1998**
(21) Numéro de dépôt: 98400101.6
(22) Date de dépôt: 20.01.1998
(51) Int. Cl.: B60N 2/36, B60N 2/42

(54) **Agencement d'un siège, notamment une banquette arrière, dans un habitacle de véhicule automobile**

(30) Priorité: 13.02.1997 FR 9701690
(71) Demandeur: ECIA - EQUIPEMENTS ET COMPOSANTS POUR L'INDUSTRIE AUTOMOBILE, F-25400 Audincourt (FR)
(72) Inventeur: Amorim, David, 45290 Nogent Sur Vernisson (FR); Geoffroy, Yves, 45290 Nogent Sur Vernisson (FR)
(74) Mandataire: de la Bigne, Guillaume Michel Marie

(57) **Abrégé**

Le siège (10) comporte un dossier (16) monté articulé dans l'habitacle (12) autour d'un axe (X) sensiblement horizontal et transversal au siège. Le dossier (16) comporte une armature munie d'une traverse (18) s'étendant sensiblement parallèlement à l'axe d'articulation (X) et à proximité de ce dernier. La traverse (18) est reliée à une partie d'ancrage fixe (26) de l'habitacle par un lien souple (28) tendu entre cette traverse (18) et cette partie d'ancrage (26).

## Description

La présente invention concerne un agencement d'un siège, notamment une banquette arrière, dans un habitacle de véhicule automobile.

On connaît déjà dans l'état de la technique un agencement d'un siège dans un habitacle de véhicule automobile, le siège comportant un dossier monté articulé dans l'habitacle autour d'un axe sensiblement horizontal et transversal au siège, le dossier comportant une armature munie d'une traverse s'étendant sensiblement parallèlement à l'axe d'articulation et à proximité de ce dernier.

Un agencement de ce type permet, dans le cas d'une banquette arrière de véhicule , de moduler le volume disponible dans la partie de l'habitacle formant coffre. En effet, le dossier de la banquette est déplaçable autour de son axe d'articulation entre une première position dressée sensiblement verticalement d'utilisation de la banquette, dans laquelle le dossier forme une séparation entre le coffre et la partie habitable de l'habitacle, et une seconde position rabattue sensiblement horizontalement d'augmentation du volume du coffre.

Lorsque le dossier de la banquette est dressé, en cas de freinage brusque ou de choc frontal du véhicule, les charges (notamment les bagages) placées dans le coffre sont susceptibles d'être projetées violemment contre le dossier et risquent de déformer et d'arracher les moyens d'articulation du dossier.

Ce risque est d'autant plus important que les moyens d'articulation et l'armature du dossier sont légers et de solidité limitée, ce qui est le cas dans certains véhicules bas de gamme.

US-A-3 493 211 décrit un agencement du type précité dans lequel la traverse est reliée à une partie d'ancrage fixe de l'habitacle par un lien souple tendu entre cette traverse et cette partie fixe.

L'invention a pour but de proposer des moyens simples et peu coûteux permettant d'augmenter la résistance à la déformation et à l'arrachement des moyens d'articulation d'un dossier de siège formant notamment banquette arrière.

A cet effet, l'invention a pour objet un agencement d'un siège dans un habitacle de véhicule automobile, du type décrit dans US-A-3 493 211, caractérisé en ce que le lien comporte une première extrémité enlacée de façon à former un collet de serrage entourant la traverse, et une seconde extrémité reliée à une patte d'accrochage du lien sur la partie d'ancrage, le collet étant serré par traction sur la seconde extrémité.

Suivant d'autres caractéristiques de l'invention:
- la patte d'accrochage est fixée sur la partie d'ancrage au moyen d'une vis ;
- le lien comprend un câble métallique ;
- le câble est replié sur lui-même de manière à présenter deux brins munis d'extrémités de jonction formant une boucle du câble et d'extrémités libres serties dans la patte d'accrochage, le collet étant formé par passage des extrémités libres des brins dans la boucle du câble ;
- le lien comporte une gaine, de préférence en plastique, resserrant l'un contre l'autre et recouvrant au moins partiellement les deux brins du câble;
- le siège est une banquette arrière de véhicule dont le dossier est destiné à séparer une première partie formant coffre de l'habitacle d'une seconde partie habitable de l'habitacle ;
- la partie d'ancrage est une partie du plancher de l'habitacle délimitant le coffre.

L'invention sera mieux comprise à la lecture de la description qui va suivre donnée uniquement à titre d'exemple et faite en se référant aux dessins dans lesquels :
- la figure 1 est une vue schématique en élévation d'une banquette arrière de véhicule automobile agencée selon l'invention dans l'habitacle de ce véhicule;
- la figure 2 est une vue en plan du lien souple destiné à être tendu entre la traverse du dossier de la banquette représentée sur la figure 1 et la partie d'ancrage de l'habitacle.

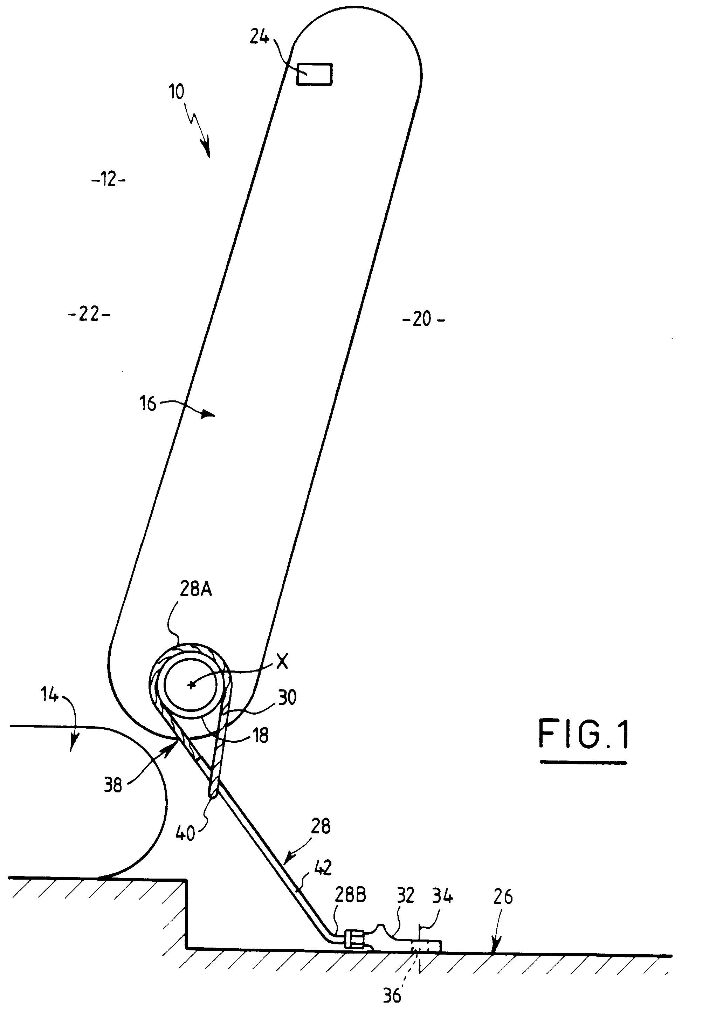

On a représenté sur la figure 1 une banquette arrière 10 agencée selon l'invention dans un habitacle 12 de véhicule automobile.

De façon classique, la banquette 10 comporte une assise 14 et un dossier 16 monté articulé dans l'habitacle, à l'aide de moyens connus en soi, autour d'un axe X sensiblement horizontal et transversal à la banquette.

Dans l'exemple illustré, la traverse 18 est sensiblement coaxiale à l'axe X.

Le dossier 16 comporte une armature classique dont on a représenté uniquement une traverse 18 s'étendant sensiblement parallèlement à l'axe X et à proximité de ce dernier.

Le dossier 16 est déplaçable entre, d'une part, une première position dressée sensiblement verticalement d'utilisation de la banquette, dans laquelle ce dossier forme une séparation entre une partie formant coffre 20 de l'habitacle et une partie habitable 22 de cet habitacle, comme cela est représenté sur la figure 1, et d'autre part, une seconde position rabattue sensiblement horizontalement d'augmentation du volume du coffre 20.

Le dossier 16 est maintenu dans sa position d'utilisation à l'aide de moyens classiques de verrouillage libérables dont on a représenté uniquement un organe de commande 24 porté par le dossier 16.

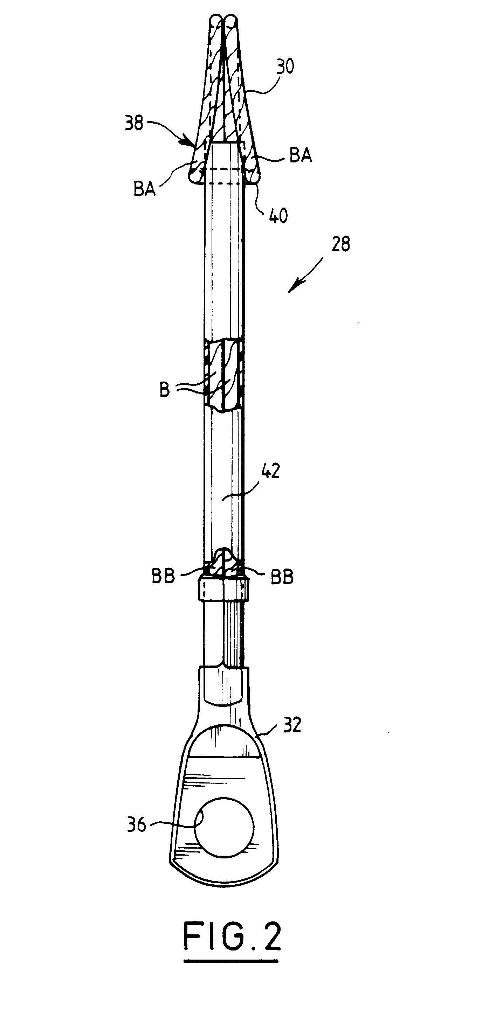

La traverse 18 est reliée à une partie d'ancrage fixe 26 de l'habitacle par un lien souple 28, représenté plus en détail sur la figure 2, tendu entre cette traverse 18 et cette partie fixe 26.

De préférence, la partie d'ancrage 26 est une partie d'un plancher de l'habitacle délimitant le coffre 20.

Le lien 28 comporte une première extrémité 28A, enlacée de façon à former un collet de serrage 30 entourant la traverse 18, et une seconde extrémité 28B reliée à une patte 32 d'accrochage du lien sur la partie d'ancrage 26.

On notera que le collet 30 est serré par traction sur la seconde extrémité 28B du lien.

La patte d'accrochage 32 est fixée sur la partie d'ancrage 26 à l'aide de moyens classiques, par exemple une vis 34 (schématisée par un trait mixte sur la figure 1) vissée dans la partie d'ancrage 26 à travers un oeillet 36 de la patte.

De préférence, le lien 28 comprend un câble métallique 38 replié sur lui-même de manière à présenter deux brins B (voir figure 2).

Les brins B sont munis d'extrémités de jonction BA formant une boucle 40 du câble et d'extrémités libres BB serties dans la patte d'accrochage 32.

Le collet 30 est formé par passage des extrémités libres BB des brins dans la boucle 40.

Le lien 28 comporte de plus une gaine 42, de préférence en plastique, resserrant l'un contre l'autre et recouvrant au moins partiellement les deux brins B du câble.

Le montage du lien 28 est très simple.

Pour cela, on accroche la première extrémité 28A du lien sur la traverse 18 en formant le collet 30 autour de cette traverse par passage de la seconde extrémité 28B du lien dans la boucle 40 de ce lien, puis on fixe la patte 32 sur la partie d'ancrage 26 par vissage de la vis 34.

Du fait, d'une part, de la souplesse du lien 28, et d'autre part, de la proximité entre la traverse 18 et l'axe d'articulation X, le dossier 16 peut être déplacé autour de l'axe X entre ses positions dressée et rabattue, comme en l'absence de lien.

De préférence, le lien 28 est accroché sensiblement au milieu de la traverse 18 entre les extrémités de celle-ci.

En variante, deux liens souples, ou plus, peuvent être accrochés entre la traverse 18 et la partie d'ancrage 26. Lorsque l'on utilise deux liens 28, chacun d'eux est accroché à proximité d'une extrémité de la traverse 18.

Si nécessaire, la matelassure du dossier 16, qui recouvre habituellement l'armature de ce dossier, peut comporter, au droit du point d'accrochage du lien 28 sur la traverse 18, un évidement ou une échancrure facilitant l'accès à ce point d'accrochage.

La description qui précède fait ressortir notamment les avantages de l'invention suivants.

Le lien souple 28, simple et peu coûteux, permet à la traverse 18 et aux moyens d'articulation du dossier de la banquette placés à proximité de cette traverse de résister efficacement, en cas de freinage brusque ou de choc frontal, aux chocs contre le dossier des bagages rangés dans le coffre. En effet, le lien 28 transmet les efforts subis par le dossier au plancher de l'habitacle.

Par ailleurs, l'invention permet de renforcer de façon simple et peu coûteuse une banquette arrière classique, de structure relativement légère et de solidité limitée, afin de la rendre conforme aux nouvelles normes qui imposent que le dossier d'une banquette arrière résiste suffisamment à des chocs de bagages contenus dans le coffre.

Enfin, le lien de l'agencement selon l'invention est très facile à mettre en place.

Bien entendu, l'invention ne s'applique pas uniquement à une banquette arrière, mais à tout siège muni d'un dossier articulé que l'on veut renforcer pour résister à des efforts tendant à le déformer ou à l'arracher.

## Revendications

1. Agencement d'un siège (10) dans un habitacle (12) de véhicule automobile, le siège (10) comportant un dossier (16) monté articulé dans l'habitacle autour d'un axe (X) sensiblement horizontal et transversal au siège, le dossier (16) comportant une armature munie d'une traverse (18) s'étendant sensiblement parallèlement à l'axe d'articulation (X) et à proximité de ce dernier, la traverse (18) étant reliée à une partie d'ancrage fixe (26) de l'habitacle par un lien souple (28) tendu entre cette traverse (18) et cette partie fixe (26), **caractérisé en ce que** le lien (28) comporte une première extrémité (28A) enlacée de façon à former un collet de serrage (30) entourant la traverse (18), et une seconde extrémité (28B) reliée à une patte (32) d'accrochage du lien sur la partie d'ancrage (26), le collet (30) étant serré par traction sur la seconde extrémité (28B).

2. Agencement selon la revendication 1, caractérisé en ce que la patte d'accrochage (32) est fixée sur la partie d'ancrage (26) au moyen d'une vis (34).

3. Agencement selon l'une quelconque des revendications précédentes, caractérisé en ce que le lien (28) comprend un câble métallique (38).

4. Agencement selon la revendication 3, caractérisé en ce que le câble (38) est replié sur lui-même de manière à présenter deux brins (B) munis d'extrémités de jonction (BA) formant une boucle (40) du câble et d'extrémités libres (BB) serties dans la patte d'accrochage (32), le collet (30) étant formé par passage des extrémités libres (BB) des brins dans la boucle (40) du câble.

5. Agencement selon la revendication 4, caractérisé en ce que le lien (28) comporte une gaine (42), de préférence en plastique, resserrant l'un contre l'autre et recouvrant au moins partiellement les deux brins (B) du câble (38).

6. Agencement selon l'une quelconque des revendications précédentes, caractérisé en ce que le siège est une banquette arrière (10) de véhicule dont le dossier (16) est destiné à séparer une première partie formant coffre (20) de l'habitacle d'une seconde partie habitable (22) de l'habitacle.

7. Agencement selon la revendication 6, caractérisé en ce que la partie d'ancrage (26) est une partie du plancher de l'habitacle délimitant le coffre (20).
